# EUROPÄISCHE PATENTANMELDUNG

(11) **EP 4 089 129 A1**
(43) Veröffentlichungstag der Anmeldung: **16.11.2022**
(21) Anmeldenummer: 21173711.9
(22) Anmeldetag: 12.05.2021
(51) Int. Cl.: C08G 18/28, C08G 18/42, C08G 18/76

(54) **LAGERSTABILE POLYESTERPOLYOLFORMULIERUNGEN ENTHALTEND TEREPHTHALSÄURE-BASIERTE POLYESTER**

(71) Anmelder: Covestro Deutschland AG, 51373 Leverkusen (DE)
(72) Erfinder: Marbach, Jakob, 51069 Köln (DE); Albach, Rolf, 51061 Köln (DE)
(74) Vertreter: Levpat

(57) **Zusammenfassung**

Diese Anmeldung betrifft lagerstabile Polyolformulierungen enthaltend Terephthalsäure-basierte Polyester und cyclische Carbonate, sowie deren Verwendung für die Herstellung von Polyurethan (PUR) - sowie Polyurethan/Polyisocyanurat (PUR/PIR) - Hartschaumstoffen.

## Beschreibung

Die vorliegende Erfindung betrifft lagerstabile Polyolformulierungen enthaltend Terephthalsäure-basierte Polyester und cyclische Carbonate, sowie deren Verwendung für die Herstellung von Polyurethan (PUR) - sowie Polyurethan/Polyisocyanurat (PUR/PIR) - Hartschaumstoffen.

PUR/PIR-Hartschaumstoffe werden typischerweise durch Umsetzung einer Polyol- mit einer Isocyanatkomponente in Gegenwart eines Treibmittels hergestellt. Weiterhin können Additive wie Schaumstabilisatoren und Flammschutzmittel zugesetzt werden.

Polyester-Polyole sind wichtiger Bestandteil vieler geschäumter und nicht geschäumter Polyurethansysteme. Derartige Polyester-Polyole werden häufig durch Kondensation von aromatischen und/oder aliphatischen Dicarbonsäuren und Alkandiolen und/oder -triolen sowie Etherdiolen gebildet. Bei der Verwendung von aromatischen Dicarbonsäuren ist beispielsweise aus WO 2010/043624 bekannt, dass Terephthalsäure-basierte Polyester bezüglich ihres Brandverhaltens Phthalsäure-basierten Polyestern überlegen sind. Es ist ebenfalls bekannt, dass zur Herstellung von Polyester-Polyolen Polyalkylenterephthalate (PAT), insbesondere Poly(ethylenterephthalat) (PET) und Poly(butylenterephthalat) (PBT)-Recyclate eingesetzt werden können. Wie in Chemistry and Technology for Polyols for Polyurethanes, M. Ionescu, 2005, Rapra Technology, beschrieben, führt die Verwendung von PAT häufig zu Produkten, die während ihrer Lagerung kristallisieren oder sedimentieren. Wünschenswert sind daher Produkte, die bei Raumtemperatur klar und flüssig sind und während ihrer Lagerung kein Sediment bilden.

EP 0974611 A lehrt die Herstellung von klaren Polyesterpolyolen, bestehend aus einem Umsetzungsprodukt von PAT, einem aliphatischen Dicarbonsäuregemisch, sowie eines cyclischen Alkandiol-Esters. Nachteilig ist hierbei die eingeschränkte Verfügbarkeit sowohl des Dicarbonsäuregemisches als auch des Ringester-Additivs. Die Eigenschaften von Polyurethan-Hartschaumstoffen unter Verwendung des klaren Polyester-Polyols werden nicht beschrieben.

Aufgabe der vorliegenden Erfindung ist es, lagerstabile Polyester-Polyolformulierungen enthaltend Terephthalsäure-basierte Polyester, welche aus Polyalkylenterephthalaten herstellbar sind, bereitzustellen. Die Komponenten der Polyolformulierung sollen möglichst leicht verfügbar und ressourcenschonend zugänglich sein; eingesetzte Additive sollen sich nicht nachteilig auf die Eigenschaften der resultierenden PUR/PIR-Hartschaumstoffe auswirken.

Als "lagerstabil" im Sinne dieser Anmeldung wird eine Polyolformulierung dann bezeichnet, wenn über einen Zeitraum von mindestens 4 Wochen, insbesondere bevorzugt von mehr als drei Monaten, keine Trübung oder Sedimentation eintritt.

Bei der Herstellung von Polyethercarbonat-Polyolen wie in Schema I dargestellt fallen cyclische Carbonate als Nebenprodukt an. Das in Schema I gezeigte Polyethercarbonatpolyol entspricht dabei nur einer der bei der Polyethercarbonatpolyol-Synthese erhaltenen Verbindungen, im Produkt sind weitere Polyole enthalten, in denen sich die Blöcke prinzipiell wiederfinden können, bei denen die Reihenfolge, Anzahl und Länge der Blöcke sowie die OH-Funktionalität des Starters aber variieren kann. Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al., Copolymerization of Carbon Dioxide and Epoxide with Organometallic Compounds; Die Makromolekulare Chemie 130, 210-220, 1969). Diese Reaktion (siehe Schema (I)) ist unter anderem deswegen ökologisch sehr vorteilhaft, da sie die Umsetzung eines Treibhausgases wie CO₂ zu einem Polymer darstellt und so eine entsprechende Menge Alkylenoxid ersetzt, d.h. einspart. Als Nebenprodukt entsteht das in Schema (I) gezeigte cyclische Carbonat.

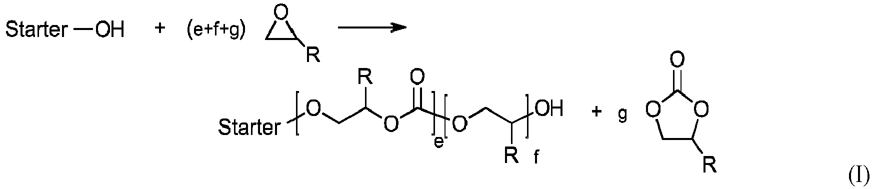

Für die Verwertung der in dem Verfahren gemäß Schema I als Nebenprodukte anfallenden cyclischen Carbonate wird zum Beispiel in WO 2019/243435 A die alkalische Hydrolyse und anschließende Verwendung des entstehenden Glykols als Starter beispielsweise für Polyether-Polyole offenbart. Nachteilig hierbei ist der Verlust des eingebauten CO₂ während der Hydrolyse.

Auch die Verwendung von cyclischen Carbonaten in Polyurethananwendungen ist dem geübten Fachmann bekannt, so beschreibt US 3,883,466 den Einsatz von cyclischen Carbonaten als flüssiges Additiv für schnell härtende Polyurethanmassivsysteme. Cyclische Carbonate und Lactone wurden weiterhin eingesetzt als viskositätsreduzierendes Additiv in aromatischen Polyester-Polyolen basierend auf Dimethylterephthalat (DMT)-Prozessrückständen (EP 0276452 A). Eine Verbesserung der Lagerstabilität ist jedoch aufgrund der heterogenen Zusammensetzung von DMT-Prozessrückständen nicht erforderlich (J. S. Canaday, M. J. Skowronski, Journal of Cellular Plastics, 1985, 338 - 344).

Die in dem Verfahren gemäß Schema I als Nebenprodukte anfallenden cyclischen Carbonate einer sinnvollen Verwendung zuzuführen, ist eine weitere Aufgabe der vorliegenden Erfindung.

Die oben genannten Aufgaben wurden überraschenderweise dadurch gelöst, dass Terephthalsäurebasierten Polyester-Polyolen nach ihrer Herstellung cyclische Carbonate zugemischt werden.

Gegenstand der Erfindung ist somit eine Formulierung B) enthaltend die Komponenten B1) mindestens ein Polyester-Polyol erhältlich aus Terephthalsäure und einem oder mehreren Diolen mit einem Molgewicht <100 g/mol und B2) mindestens ein cyclisches Carbonat der Struktur II oder III.

Das Gewichtsverhältnis der Komponente B1) zu B2) liegt insbesondere in einem Bereich von 85 : 15 - 99 : 1, mehr bevorzugt in einem Bereich von 88 : 12 - 97 : 3 und ganz besonders bevorzugt in einem Bereich von 90 : 10 - 95 : 5.

Die Polyester-Polyole B1) können hergestellt werden mit einer oder mehreren Carboxy-funktionellen Verbindungen ausgewählt aus der Gruppe bestehend aus Terephthalsäure und Derivaten der Terephthalsäure (CS1) und einer oder mehreren Verbindungen ausgewählt aus der Gruppe bestehend aus Diolen mit einem Molgewicht <100 g/mol bzw. die zur Umesterungsreaktion geeigneten Derivate dieser Diole (AK1).

Unter "Derivaten der Terephthalsäure" sind Reaktionsprodukte der Terephthalsäure mit Reaktionspartnern zu verstehen, aus denen sich bei geeigneten Reaktionsbedingungen die Terephthalsäure wieder freisetzen lässt. In einer bevorzugten Ausführungsform werden Polyester der Terephthalsäure mit aliphatischen und / oder aromatischen Kondensationspartnern eingesetzt. Besonders bevorzugt werden Polyalkylen-terephthalate bzw. Terephthalat-Mischungen enthaltend überwiegend Polyalkylenterephthalate, eingesetzt, wobei es sich bei dem Polyalkylenterephthalat insbesondere bevorzugt um Polyethylenterephthalat handelt. Aber auch mit Cyclohexandimethanol modifiziertes Poly(ethylen)terephthalat, aromatisch-aliphatische Copolyester (z.B. erhältlich unter dem Markennamen Ecoflex), Polytrimethylenterephthalat, Polybutylenterephthalat und Terephthalsäure-basierte Nebenprodukte aus der Herstellung der genannten Polyester können geeignet sein. In einer Ausführungsform können die genannten Polymere auch mit anderen Polykondensationspolymeren wie Polyamiden (z.B. Polyamid 6, Polyamid 66, MXD6 und anderen) als Compounds, als physikalische Mischung und/oder als Laminate vorliegen. Die Terephthalate können auch mit anderen Polymeren wie Polyolefinen oder PVC oder anderen Materialien wie Papier, Metallfolien oder Staub verunreinigt sein, die im Endprodukt als Nebenprodukte vorliegen und dort verbleiben oder durch Abtrennung entfernt werden.

Zu den Verbindungen AK1 gehören zum Beispiel Ethandiol sowie die isomeren Butandiole, Butendiole und Butindiole und Propandiole, besonders bevorzugt Ethandiol. Diese Alkohole können auch in Form von Derivaten, z.B. ihrer Ester eingesetzt werden.

Die Polyesterpolyole B1) weisen bevorzugt eine Viskosität von ≤ 8 Pa^{∗}s (25°C), insbesondere 1 - 8 Pa^{∗}s (25°C), besonders bevorzugt 1 - 7 Pa^{∗}s (25°C) und ganz besonders bevorzugt von 1 - 5 Pa^{∗}s (25 °C) auf.

In einer Ausführungsform weisen die Polyesterpolyole B1) Hydroxylzahlen von 150 bis 350 mg KOH/g auf, bevorzugt von 160 bis 260 mg KOH/g, besonders bevorzugt von 165 bis 260 mg KOH/g auf, eine Säurezahl von 0,5-5 mg KOH/g, insbesondere bevorzugt 1,5 - 3,0 mg KOH/g, auf.

Das Polyesterpolyol kann ferner eine OH-Funktionalität von 1,8 bis 3 besitzen, bevorzugt von 1,9 bis 2,5, insbesondere bevorzugt von 1,9 - 2,1.

Zur Herstellung der Polyesterpolyole B1) wird das Gemisch aus Carbonsäuren bzw. Carbonsäurederivaten (CS) mindestens umfassend CS1 mit einem Gemisch aus Alkoholen bzw. Alkoholderivaten (AK) mindestens umfassend AK1 umgesetzt.

In einer bevorzugten Ausführungsform werden für die Herstellung der Polyester-Polyole B1) neben CS 1 eine oder mehrere weitere Carbonsäuren bzw. Carbonsäurederivate (im weiteren auch zusammen mit "Carboxy-funktionelle Verbindungen" bezeichnet) eingesetzt. Bei den weiteren Carboxy-funktionellen Verbindungen handelt es sich insbesondere um Verbindungen ausgewählt aus der Gruppe enthaltend aromatische Dicarbonsäuren, aliphatische Dicarbonsäuren, Monocarbonsäuren und die Derivate dieser Säuren.

Als weitere Bestandteile der Mischung aus Carboxy-funktionellen Verbindungen CS werden insbesondere eine oder mehrere der Komponenten CS2 - CS5 eingesetzt. Bei den Derivaten handelt es sich beispielsweise um die Chloride, Anhydride, Amide und/oder Ester, der entsprechenden Carbonsäuren. Insbesondere werden die freien Säuren oder deren Anhydride eingesetzt.

Die Komponente CS2 umfasst eine oder mehreren Verbindungen aus der Gruppe bestehend aus difunktionellen aromatischen Säuren und difunktionellen aromatischen Carbonsäurederivaten welche unterschiedlich von der Komponente CS1 sind. Bevorzugt sind Verbindungen, die von Phthalsäure, Isophthalsäure, Naphthalindicarbonsäure, Furandicarbonsäure, oder Kombinationen von diesen Säuren abgeleitet sind, insbesondere von Phthalsäure. Auch Tricarbonsäuren wie Trimellithsäure und ihre Derivate sind als Comonomere möglich. Die unter CS2 fallenden Polyethylennaphthalate, Isophthalate oder Polyethylenfuranoate können auch in den eingesetzten Polyalkylenterephthalaten CS1 als Nebenprodukte enthalten sein.

Die Komponente CS3 umfasst eine oder mehreren Verbindungen aus der Gruppe bestehend aus difunktionellen aliphatischen Carbonsäuren und difunktionellen aliphatischen Carbonsäurederivaten. Bevorzugt sind Verbindungen, die von Adipinsäure, Glutarsäure, Bernsteinsäure, Pimelinsäure, Korksäure, Azelainsäure, Decandicarbonsäure, Maleinsäure, Fumarsäure, Malonsäure, Sebacinsäure und Mischungen einer oder mehrerer dieser Säuren abgeleitet sind, insbesondere von Adipinsäure. Auch Nebenprodukte aus der Herstellung dieser Säuren können geeignet sein. Die Adipinsäure kann auch in Form von Polyamid 66, z. B. als Compound mit Komponente CS1, eingetragen werden.

Die Komponente CS4 umfasst eine oder mehreren Verbindungen aus der Gruppe bestehend aus Monocarbonsäuren. Hierunter und bevorzugt werden Fettsäuren und Fettsäurederivate eingesetzt, z.B. Triglyceride wie Rizinusöl, Polyhydroxyfettsäuren, Ricinolsäure, Hydroxyl-modifizierte Öle, Weintraubenkernöl, schwarzes Kümmelöl, Kürbiskernöl, Borretschsamenöl, Sojabohnenöl (Sojaöl), Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Tallöl und seine Komponenten, Fettsäurechloride und Fettsäurealkylester, Hydroxymodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure, insbesondere Ölsäure. Die Monocarbonsäure-Komponente kann aber auch ein Derivat der Benzoesäure, eine Hydroxycarbonsäure wie ein geöffnetes Lacton bzw. eine Hydroxybenzoesäure oder eine Aminocarbonsäure oder deren Derivat sein, wie sie bei der Ringöffnung von Lactamen bzw. bei der Hydrolyse von Polyamid 6 entstehen. Polyamid 6 kann gegebenenfalls als Compound mit Komponente CS1 eingetragen werden. Auch Nebenprodukte aus der Herstellung dieser Säuren können geeignet sein. In einer sehr bevorzugten Ausführungsform besteht die Komponente CS4 vollständig aus natürlichen, gegebenenfalls umgeesterten oder hydrolysierten oder hydratisierten Triglyzeriden. Insbesondere bevorzugt ist der Einsatz von Sojaöl.

Zur Synthese des Polyesterpolyols können neben den oben genannten Carbonsäure-Komponenten noch weitere Carbonsäuren CS5 eingesetzt werden, welche nicht unter die Komponenten CS1 - CS4 fallen. Die Komponenten CS1 - CS5 können auch in Form von Produktmischungen eingesetzt werden, beispielsweise werden bei der Oxidation von Cyclohexan, wie in WO2010088227 [0036] beschrieben, Mischungen aus Dicarbonsäuren CS3 und Monocarbonsäuren CS4 erhalten, welche als Einsatzstoff geeignet sind.

Insbesondere umfasst CS neben CS1 auch eine oder mehrere Verbindungen CS3.

Als weitere Bestandteile der Mischung aus Alkoholen bzw. Alkoholderivaten werden neben AK1 insbesondere eine oder mehrere der Komponenten AK2 - AK5 eingesetzt.

Die Komponente AK2 umfasst eine oder mehreren Verbindungen aus der Gruppe bestehend aus Diolen mit einem Molekulargewicht von 100-190 g/mol bzw. die zur Umesterungsreaktion geeigneten Derivate dieser Diole. Die Alkohole AK2 weisen im Mittel >80 mol-% primäre aliphatische OH-Funktionen auf. In einer bevorzugten Ausführungsform weist die Komponente AK2 100 mol-% primäre aliphatische OH-Funktionen auf. Zu dieser Gruppe gehören beispielsweise die Verbindungen Diethylenglykol, Triethylenglykol, 1,5-Pentandiol, Neopentylglykol, 1,6-Hexandiol und 2-Butyl-2-ethyl-1,3-propandiol. Die genannten Glykole können auch in Form ihrer Derivate, z.B. cyclische Carbonate, als Ketale und/oder Acetale eingesetzt werden. Die Gruppe enthält jedoch keine aromatischen Diole bzw. deren Derivate wie Alkoxylate und Carbonate. In einer bevorzugten Ausführungsform enthält die Komponente AK2 mehr als 80 mol% Diethylenglykol. In geringer Menge kann die Komponente AK2 auch Diole mit sekundären Hydroxylgruppen enthalten, beispielsweise Isosorbit und Dipropylenglykole.

Die Komponente AK3 umfasst eine oder mehreren Verbindungen aus der Gruppe bestehend aus Diolen mit einem Molekulargewicht >190 g/mol, bevorzugt 191 - 800 g/mol, bzw. die zur Umesterungsreaktion geeigneten Derivate dieser Diole. Hierzu gehören modifizierte Diole der Gruppe AK2, wie z.B. 2,3-Dibrombuten-1,4-diol, und höhermolekulare Diole, insbesondere oligomere und polymere Polyalkylenoxide wie z.B. Polyethylenglykole, Tripropylenglykole und Alkoxylate von Dihydroxybenzol. In einer bevorzugten Ausführungsform werden in der Synthese des Polyesters B1) keine Bisphenole vom Typ X(C₆H₄-OH)₂ (X = CH₂, C(CH₃)₂, S, SO₂) und ihre Carbonate und Alkylenoxid-Addukte eingesetzt. Der Zusatz dieser Komponente, insbesondere Polyethylenglykolen, wirkt sich vorteilhaft auf die Anwendung in PUR/PIR-Hartschäumen aus.

Die Komponente AK4 umfasst eine oder mehreren Verbindungen aus der Gruppe bestehend aus Polyhydroxylverbindungen mit einer Funktionalität ≥ 3, bzw. die zur Umesterungsreaktion geeigneten Derivate dieser Polyhydroxylverbindungen. Beispiele sind Pentaerythrol und die Nebenkomponenten bei seiner Herstellung, Trimethylolalkane wie Trimethylolpropan, insbesondere Glyzerin, welches insbesondere aus eingesetzten Fettsäurederivaten stammt.

Die Komponente AK5 umfasst eine oder mehreren Verbindungen aus der Gruppe bestehend Monoolen bzw. die zur Umesterungsreaktion geeigneten Derivate dieser Monoole, z.B. nichtionische Tenside, beispielsweise alkoxylierte Di-und Alkyl- und Styrylphenole, alkoxylierte C8-C20 Monocarbonsäuren und C8-C20 Monole und deren Alkoxylate. Die Alkohole können auch in Form ihrer Derivate eingesetzt werden. In einer bevorzugten Ausführungsform werden in der Synthese des Polyesterpolyols B1) keine alkoxylierten Octyl- Nonylphenole eingesetzt.

Die oben beschriebenen Alkohole (AK) können wie beschrieben auch alle in der Form ihrer Derivate eingesetzt werden, aus denen sich bei der Polyestersynthese die von den Alkoholen abgeleiteten Baueinheiten ak im Polyesterpolyol B1 ergeben, z.B. in Form ihrer Ester in Verbindung mit einer der Säurekomponenten CS1 - CS5. Die mehrwertigen Alkohole können alle ebenfalls in Form ihrer Derivate, z.B. auch in Form ihrer cyclischen Carbonate, Ketale und Acetale eingesetzt werden.

Insbesondere umfasst AK neben AK1 auch eine oder mehrere Verbindungen AK3.Die Carbonsäurekomponenten CS und die alkoholischen Komponenten AK werden nach dem Fachmann bekannten Veresterungs- und Umesterungsmethoden zu einem Polyesterpolyol B1) umgesetzt. Das resultierende Polyesterpolyol B1) besteht dann aus den Baueinheiten cs, erhältlich aus den Säurekomponenten CS, und aus den Baueinheiten ak, erhältlich aus den alkoholischen Komponenten AK.

Bevorzugt wird das Polyesterpolyol B1) hergestellt aus einem Gemisch CS aus Carboxy-funktionellen Verbindungen umfassend:
CS1 eine Verbindung ausgewählt aus der Gruppe bestehend aus Terephthalsäure und Derivaten der Terephthalsäure,
CS2 optional eine von CS1 verschiedene Verbindung ausgewählt aus der Gruppe bestehend aus aromatischen Dicarbonsäuren und deren Derivate, insbesondere ein niedermolekulares Derivat, ganz besonders bevorzugt Phthalsäureanhydrid
CS3 optional mindestens eine, bevorzugt mindestens eine Verbindung ausgewählt aus der Gruppe bestehend aus aliphatischen Dicarbonsäuren und deren Derivaten,
CS4 optional mindestens eine, bevorzugt mindestens eine Verbindung ausgewählt aus der Gruppe bestehend aus Monocarbonsäuren mit einem Molgewicht ≥ 100 g/mol und deren Derivaten,
CS5 optional weitere Carbonsäuren und / oder deren Derivate,
   mit einem Gemisch AK aus alkoholischen Verbindungen umfassend:
   AK1 mindestens eine Verbindung ausgewählt aus der Gruppe bestehend aus Diolen mit einem Molgewicht <100 g/mol und deren Derivate,
   AK2 optional mindestens eine, bevorzugt mindestens eine Verbindung ausgewählt aus der Gruppe bestehend aus Diolen mit einem Molgewicht von 100-190 g/mol, bevorzugt mit >80 mol-% der OH-Funktionen primäre aliphatische OH-Funktionen, und deren Derivate,
   AK3 optional mindestens eine, bevorzugt mindestens eine, Verbindung ausgewählt aus der Gruppe bestehend aus Diolen mit einem Molgewicht von mit einem Molgewicht >190 g/mol, bevorzugt 191 - 800 g/mol, oder deren Derivate,
   AK4 optional eine oder mehrere Verbindungen ausgewählt aus der Gruppe bestehend aus Polyhydroxylverbindungen mit einer Funktionalität ≥3 und mit einem Molgewicht 90-190 g/mol (keine Polyether) und deren Derivaten
   AK5 optional ein oder mehrere Monoole, z. B. nichtionische Tenside, und / oder Derivate dieser Alkohole,
      optional in Gegenwart eines Veresterungskatalysators K umgesetzt wird. Insbesondere werden die Edukte bevorzugt in Gegenwart von 0-0,2 Gew.-% bezogen auf die Summe von CS und AK, eines Metallsalzes miteinander umgesetzt.

Insbesondere ist das Polyesterpolyol B1) aufgebaut aus:

| | | |
|---|---|---|
| cs1 | 40-60 Mol.-% bezogen auf cs, | bevorzugt 45-55 Mol.%, Baueinheiten erhältlich aus Terephthalsäure CS1, |
| cs2 | 0-25 Mol.-% bezogen auf cs, | bevorzugt 0-20 Mol.-%, Baueinheiten abgeleitet von mindestens einer weiteren von CS1 verschiedenen aromatischen Dicarbonsäure, |
| cs3 | 15-45 Mol.-% bezogen auf cs, | bevorzugt 25-40 Mol.-%, Baueinheiten abgeleitet von mindestens einer aliphatischen Dicarbonsäure |
| cs4 | 4-14 Mol.-% bezogen auf cs, | Baueinheiten abgeleitet von mindestens einer Monocarbonsäure mit einem Molgewicht ≥100 g/mol, und |
| cs5 | 0-41 Mol.-% bezogen auf cs, | Baueinheiten abgeleitet von weiteren Carbonsäuren, und aus |
| ak1 | 25-40 Mol.-% bezogen auf ak, | bevorzugt 25-38 Mol.-% Baueinheiten abgeleitet von ein oder mehreren Diolen mit einem Molgewicht < 100 g/mol, |
| ak2 | 55-75 Mol.-% bezogen auf ak, | bevorzugt 60 - 75 Mol. -% Baueinheiten abgeleitet von ein oder mehreren Diolen mit einem Molgewicht von 100-190 g/mol, bevorzugt sind >80 mol-% der OH-Funktionen primäre aliphatische OH-Funktionen, |
| ak3 | 3-9 Mol.-% bezogen auf ak, | Baueinheiten abgeleitet von ein oder mehreren Diolen mit einem Molgewicht >190 g/mol, bevorzugt 191 - 800 g/mol, |
| ak4 | 0-3 Mol.-% bezogen auf ak, | Baueinheiten abgeleitet von ein oder mehreren Polyolen mit einer Funktionalität ≥3 und mit einem Molgewicht 90-190 g/mol (keine Polyether), |
| ak5 | 0-2 Mol.-% bezogen auf ak, | Baueinheiten abgeleitet von ein oder mehreren Monoolen, z. B. nichtionische Tensiden. |

In einer Ausführungsform fuhrt der Stickstoffgehalt in den Ausgangskomponenten der Polyestersynthese zu einem Stickstoffgehalt von mindestens 0,1 Gew.-% im Polyesterpolyol B1).

In einer bevorzugten Ausführungsform führt der Stickstoffgehalt in den Ausgangskomponenten der Polyestersynthese zu einem Stickstoffgehalt von weniger als 0,1 Gew.-% im Polyesterpolyol B1).

Als Katalysatoren K kommen im Prinzip sämtliche für die Herstellung von Polyestern bekannte Katalysatoren in Frage. Dies sind beispielsweise Zinn-Salze, z.B. Zinndichlorid oder Zinndiethylhexanoat, Titanate, z.B. Tetrabutyltitanat, Tetraisopropyltitanat oder Tyzor EZ oder starke Säuren, z.B. p-Toluolsulfonsäure, sowie Organozinnverbindungen, z.B. Dibutylzinndilaurat oder Salze des Wismuts, sowie die Carboxylate des Zinks, des Mangans, und anderer Übergangsmetalle. Die Polyesterpolyole B1) können aber auch ohne den Einsatz von Katalysatoren hergestellt werden. Der Katalysator kann zu Beginn, oder im Laufe der Reaktion zugegeben werden und auch ggf. im Laufe der Reaktion gezielt desaktiviert werden.

Bei der Veresterungsreaktion kann in an sich bekannter Weise so vorgegangen werden, dass mindestens die Edukte vorgelegt und durch Erhitzen zur Reaktion gebracht werden. Normalerweise werden die Polyesterpolyole ohne Verwendung eines Lösungsmittels hergestellt. Das Austragen des Reaktionswassers in der lösungsmittelfreien Variante wird bevorzugt durch Anlegen eines Unterdrucks, insbesondere gegen Ende der Veresterung, unterstützt. Das Austragen des Reaktionswassers kann auch durch Durchleiten eines inerten Gases, etwa Stickstoff oder Argon, unterstützt werden. Hierbei werden Drücke von 1 bis 500 mbar angewendet. Eine Veresterung ist jedoch auch oberhalb 500 mbar möglich. Die Veresterung kann jedoch auch unter Zusatz eines Lösungsmittels erfolgen, insbesondere eines wasserschleppenden Lösungsmittel (Azeotropveresterung), wie etwa Benzol, Toluol oder Dioxan.

Bei Einsatz von Carbonsäureestern werden die Polyesterpolyole B1) durch Umesterung hergestellt. Werden Ester der Carbonsäuren mit niedermolekularen Alkoholen eingesetzt, können die in den niedermolekularen Estern enthaltenen Alkohole dem Reaktionsgemisch entzogen werden. Häufig werden die Dimethyl - oder Diethylester eingesetzt. Hierbei können ebenfalls Lösungsmittel, wie etwa Benzol, Toluol oder Dioxan, verwendet werden, um die in den niedermolekularen Estern enthaltenen Alkohole dem Reaktionsgemisch azeotrop zu entziehen.

Die Veresterung bzw. Umesterungsreaktion wird bevorzugt bei reduzierten Drücken von 1 bis 600 mbar, insbesondere bei Drücken unter 500 mbar, durchgeführt.

Insbesondere kann das Polyesterpolyol B1) durch eine einstufige Veresterungsreaktion oder Umesterungsreaktion der Säurekomponenten CS und der alkoholischen Komponenten AK hergestellt werden.

In einer anderen, ebenfalls bevorzugten Ausführungsform wird das Polyesterpolyol B1) in einer zweistufigen Veresterungsreaktion hergestellt. In diesem Fall werden in der ersten Stufe bevorzugt die Komponenten CS1 und ggfs. CS4 mit allen Verbindungen oder einem Teil der Verbindungen der Komponente AK zusammengegeben und zur Reaktion gebracht, und in der zweiten Stufe das Produkt der ersten Stufe mit den weiteren Komponenten aus CS und AK umgesetzt.

Die Einwaagen der Ausgangskomponenten für die Polyestersynthese CS1 - CS5 und AK1 - AK5 werden nach dem Fachmann bekannten Methoden so berechnet, dass sich in der Bilanz die Zusammensetzung des Polyesterpolyols B1) ergibt. Niedermolekulare Reaktanden, die während der Reaktion dem Reaktionsgemisch wieder entzogen werden, sind selbstverständlich abzuziehen.

In einer besonders bevorzugten Ausführungsform enthalten die Ausgangskomponenten CS1 und AK1 für die Polyestersynthese Polyethylenterephthalat.

Die erfindungsgemäße Formulierung B) enthält weiterhin das cyclische Carbonat B2), bei dem es sich bevorzugt um ein Fünfring - Carbonat der Struktur II oder ein Sechsring - Carbonat der Struktur III handelt.

Die cyclischen Fünfring-Carbonate werden durch folgende allgemeine Strukturformel II beschrieben: 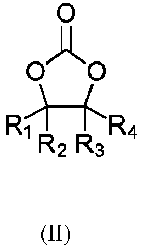 wobei die Reste R₁-R₄ Wasserstoffe, substituierte und unsubstituierte Alkyl- und Aryl-Gruppen sein können. Beispiele für erfindungsgemäße Verbindungen mit der Struktur II sind Ethylencarbonat, Propylencarbonat, Butylencarbonat, Glycerincarbonat und Styrolcarbonat.

Die cyclischen Sechsring-Carbonate werden durch folgende allgemeine Strukturformel III beschrieben: 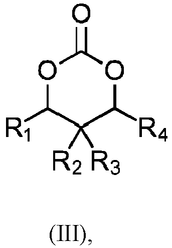 wobei die Reste R₁-R₄ Wasserstoffe, substituierte und unsubstituierte Alkyl- und Aryl-Gruppen sein können.

Beispiele für erfindungsgemäße Strukturen III sind Trimethylencarbonat, Neopentylglykolcarbonat und Pentaerythritylcarbonat.

Die cyclischen Carbonate B2) und ihre Herstellung sind bekannt, eine ökologisch vorteilhafte Variante der Herstellung gelingt über die Fixierung von CO₂ an Diolen, Oxiranen (Epoxiden) oder aktivierten Mehrfachbindungen. Alternativ werden cyclische Carbonate durch Umesterung von Kohlensäureestern, wie z.B. Dimethylcarbonat, Diethylcarbonat, Diphenylcarbonat, Ethylencarbonat oder Propylencarbonat mit Polyolen erhalten, die zwei oder mehrere Hydroxylgruppen tragen, von denen je zwei mit den Kohlensäureestern zu cyclischen Fünfring- oder Sechsring-Carbonaten reagieren.

Wie oben bereits beschrieben, fallen cyclische Carbonate B2) auch bei der Herstellung von Polyethercarbonat-Polyolen wie in Schema I dargestellt als Nebenprodukt an. Die sinnvolle stoffliche Verwertung dieser cyclischen Carbonate (welche die Struktur II mit R1 - R3 = Wasserstoff und R4 = R = organischer Rest wie Wasserstoff, Alkyl, Alkylaryl oder Aryl, der jeweils auch Heteroatome wie beispielsweise O, S, Si usw. enthalten kann, aufweisen) führt daher zu einer Maximierung der Ausbeute bezüglich des bei der Herstellung von Polyethercarbonatpolyolen eingesetzten Alkylenoxids und damit insgesamt zu einer Erhöhung der Wirtschaftlichkeit und Effizienz des Verfahrens.

Ein weiterer Schritt in Richtung nachhaltiger Synthese kann erzielt werden, indem als Ausgangsprodukte für die Carbonatsynthese organische Verbindungen hergestellt aus nachwachsenden Rohstoffen eingesetzt werden, z.B. für das Epoxid.

Besonders bevorzugt wird als cyclisches Carbonat B2) Propylencarbonat oder Ethylencarbonat eingesetzt. Die vorliegende Erfindung betrifft des Weiteren die Verwendung eines cyclischen Carbonats B2) als Additiv in einer Formulierung B) enthaltend das Polyesterpolyol B1) basierend auf Polyalkylenterephthalaten und die Verwendung dieser Formulierung B) zur Herstellung von PUR-/PIR-Hartschaumstoffen.

Die erfindungsgemäße Formulierung B) kann weitere Komponenten enthalten und umfasst bevorzugt
- mindestens ein Polyesterpolyol B1),
- mindestens ein cyclisches Carbonat B2),
- optional weitere Polyole B3), welche von B1) verschieden sind,
- optional weitere isocyanat-reaktive Komponenten B4), welche von den Polyolen B1) und B3) verschieden sind,
- optional Hilfs- und Zusatzstoffe B5), welche von B2) verschieden sind,
- optional Wasser B6),
wobei das Gewichtsverhältnis der Komponente B1) zu B2) bevorzugt im Bereich von 85 : 15 - 99 : 1 liegt, insbesondere von 88 : 12 - 97 : 3 und ganz besonders bevorzugt im Bereich von 90 : 10 - 95 : 5.

Neben dem Polyesterpolyol B1) kann die Komponente B) noch weitere Polyole B3) enthalten.

Bei den weiteren, von B1) verschiedenen Polyolen B3) handelt es sich insbesondere um solche Polyole, die ausgewählt sind aus der Gruppe bestehend aus Polyesterpolyolen, Polyetherpolyolen, Polycarbonatdiolen, Polyether-Polycarbonatdiolen und Polyetheresterpolyolen und verschieden von B1) sind.

Es ist bevorzugt, dass insgesamt der Anteil an Verbindungen aus der Gruppe bestehend aus Polyesterpolyolen und Polyetheresterpolyolen in der Komponente B), bezogen auf das Gesamtgewicht der isocyanat-reaktiven Verbindungen in der Komponente B), mindestens 40 Gew.-% und besonders bevorzugt mindestens 50 Gew.-% und ganz besonders bevorzugt mindestens 55 Gew.-% beträgt. In einer besonders bevorzugten Ausführungsform beträgt der Anteil an Polyesterpolyolen an den isocyanat-reaktiven Verbindungen in der Komponente B) 60 - 100 Gew.-%.

Neben den Verbindungen B1) weitere geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Die Polyesterpolyole können aus aromatischen und / oder aliphatischen Bausteinen hergestellt werden.

In bestimmten Ausführungsformen ist der Einsatz von Polyestern enthaltend aliphatische Dicarbonsäuren (z.B. Glutarsäure, Adipinsäure, Bernsteinsäure) bevorzugt, insbesondere der Einsatz von rein aliphatischen Polyestern (ohne aromatische Gruppen). Als Säurequelle können auch die entsprechenden Anhydride verwendet werden. Es können zusätzlich auch Monocarbonsäuren wie Benzoesäure und Alkancarbonsäuren mitverwendet werden.

Zur Herstellung der Polyesterpolyole kommen auch biobasierte Ausgangsstoffe und/oder deren Derivate in Frage, wie z. B. die oben unter der Beschreibung der Komponente CS4 genannten biobasierten Ausgangsstoffe. Der anteilige Einsatz insbesondere von Fettsäuren bzw. Fettsäurederivaten (Ölsäure, Sojaöl etc.) kann Vorteile aufweisen, z.B. im Hinblick auf Lagerstabilität der Polyolformulierung, Dimensionsstabilität, Brandverhalten und Druckfestigkeit der Schäume.

Die Polyesterpolyole weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Polyetheresterpolyole enthalten neben den Estergruppen auch Ethergruppen und OH-Gruppen. Zu ihrer Herstellung werden neben den Polyesterkomponenten werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoffaktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Bevorzugt sind in B) neben B1) weitere Polyesterpolyole und/oder Polyetheresterpolyole enthalten, welche Funktionalitäten von ≥1,2 bis ≤ 3,5, insbesondere ≥1,6 bis ≤ 2,4 und eine Hydroxylzahl zwischen 80 bis 290 mg KOH/g, besonders bevorzugt 150 bis 270 mg KOH/g und insbesondere bevorzugt von 160 - 260 mg KOH/g, aufweisen. Vorzugsweise besitzen die Polyesterpolyole und Polyetheresterpolyole mehr als 70 mol%, bevorzugt mehr als 80 mol%, insbesondere mehr als 90 mol%, primäre OH-Gruppen.

Daneben kann es vorteilhaft sein, einen Gehalt von bis zu 5 Gew.-% (bezogen auf das Gesamtgewicht an isocyanat-reaktiven Verbindung in der Komponente B) eines aromatischen Polyesterpolyols mit einer Hydroxylzahl von 320 bis 450 mg KOH/g und einer mittleren Funktionalität von 3 bis 4,5.

Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen können diese die kontinuierliche Produktion von Elementen mit flexiblen oder starren Deckschichten ermöglichen.

Diese langkettigen Polyole weisen Funktionalitäten von ≥ 1,2 bis ≤ 3,5 auf und besitzen eine Hydroxylzahl zwischen 10 und 100 mg KOH/g, bevorzugt zwischen 20 und 50 mg KOH/g. Sie besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von ≥1,2 bis ≤ 3,5 und einer Hydroxylzahl zwischen 10 und 100 mg KOH/g.

Der Zusatz von mittelkettigen Polyolen, insbesondere Polyetherpolyolen, und niedermolekularen isocyanat-reaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von ≥ 2 bis ≤ 6 auf und besitzen eine Hydroxylzahl zwischen 300 und 700 mg KOH/g.

Bei den verwendeten Polyetherpolyolen handelt es sich um die dem Fachmann bekannten, in der Polyurethansynthese einsetzbaren Polyetherpolyole mit den genannten Merkmalen.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO₂ erhältlich sind.

Neben den beschrieben Polyolen B1) und B3) können in B) weitere isocyanat-reaktive Verbindungen B4) enthalten sein, z.B. Polyamine, Polyhydroxyverbindungen, Polyaminoalkohole und Polythiole. Insbesondere werden auch niedermolekulare Kettenverlängerer und Vernetzer eingesetzt. Selbstverständlich umfassen die beschriebenen isocyanat-reaktiven Komponenten auch solche Verbindungen mit gemischten Funktionalitäten. Diese Zusätze können eine Verbesserung der Fließfähigkeit des Reaktionsgemisches und der Emulgierfähigkeit der treibmittelhaltigen Formulierung bewirken.

In der Formulierung B) können neben der Komponente B2) weitere Hilfs- und Zusatzstoffe B5) vorhanden sein, z.B. ausgewählt aus Emulgatoren, Flammschutzmittel und Katalysatoren. Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7,0 Gew.-%, jeweils bezogen auf das Gesamtgewicht der Komponenten B und C. Bevorzugte Emulgatoren sind Polyetherpolysiloxancopolymerisate. Solche sind beispielsweise unter der Bezeichnung Tegostab^{®} B84504 und B8443 der Firma Evonik, Niax* L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können eingesetzt werden.

Zur Verbesserung der Brandbeständigkeit können der Formulierung B) zudem Flammschutzmittel zugesetzt werden. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris(ß-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Komponenten B und C eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren. In bestimmten Ausführungsformen ist die Anwesenheit von Triethylphosphat (TEP) im Flammschutzmittelgemisch oder als alleiniges Flammschutzmittel besonders vorteilhaft. Zu B5) zählen auch Isocyanat-reaktive Flammschutzmittel wie die Ester bromierter Phthalsäuren oder Derivate des Dibrombutendiols, wie sie z. B. unter dem Markennamen Ixol^{®} vertrieben werden.

Die Formulierung B) kann gegebenenfalls auch in der Polyurethanchemie übliche Katalysatoren enthalten. Die zur Herstellung eines PUR-/PIR-Hartschaumstoffes nötigen aminischen Katalysatoren sowie die als Trimerisationskatalysatoren eingesetzten Salze werden in solcher Menge eingesetzt, dass z.B. auf kontinuierlich produzierenden Anlagen Elemente mit flexiblen Deckschichten mit Geschwindigkeiten bis zu 60 m/min je nach Elementstärke produziert werden können als auch für Isolationen an Rohren, Wänden, Dächern sowie Tanks und in Kühlschränken im Sprühschaumverfahren mit hinreichender Aushärtezeit hergestellt werden können. Auch eine diskontinuierliche Herstellung ist möglich. In vielen Fällen wird der Katalysator allerdings erst der Polyurethan-Reaktionsmischung aus der Polyisocyanat-Komponente A) und der Formulierung B) zugegeben.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N' ,N' -Tetramethylethylendiamin, N,N,N' ,N '-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Weiterhin umfasst die Komponente B5) auch alle anderen Additive, die Polyurethanreaktionsmischungen zugesetzt werden können. Beispiele für solche Additive sind Zellregulantien, Thixotropiermittel, Weichmacher und Farbstoffe.

Die zahlengemittelte Molmasse Mₙ (auch: Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Verfahren ohne Katalysator, Juni 2013).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (zahlengemittelte Anzahl an gegenüber Isocyanaten bzw. gegenüber Polyolen reaktiven Funktionen im Molekül).

Die "Viskosität" bzw. "dynamische Viskosität" bezeichnet im Rahmen der vorliegenden Erfindung die dynamische Viskosität, welche bestimmt werden kann entsprechend DIN 53019-1 (September 2008).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und Komponenten.

Zudem betrifft die Erfindung die Verwendung der erfindungsgemäßen Formulierung B) bei der Herstellung von PUR(Polyurethan)- und PUR/PIR-Hartschaumstoffen, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

Weiterhin betrifft die Erfindung ein Reaktionssystem zur Herstellung von PUR- und PUR-/PIR-Hartschaumstoffen, umfassend die folgenden Komponenten:
A) eine organische Polyisocyanatkomponente,
B) die erfindungsgemäße Formulierung B),
C) gegebenenfalls weitere Hilfs- und Zusatzstoffe und
D) optional Treibmittel und Co-Treibmittel,
wobei die organische Polyisocyanatkomponente A) zu den Komponenten B) und ggf. C) in einem solchen Mengenverhältnis zueinander eingesetzt sind, dass sich ein Index von 100 bis 500 ergibt, insbesondere von 140 bis 450.

Mit Index, bzw. Kennzahl wird das molare Verhältnis aller NCO-Gruppen der Komponente A) zu allen NCO reaktiven Gruppen in dem Reaktionssystem, vorliegend also der Komponenten B) und C) bezeichnet.

Die Komponente A) ist ein Polyisocyanat, also ein Isocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Polyisocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenylmethylen-diisocyanates, welche eine NCO - Funktionalität f > 2 aufweisen und sich durch folgende Summenformel beschreiben lassen: C₁₅H₁₀N₂O₂[C₈H₅NO]ₙ, wobei n = ganze Zahl > 0, bevorzugt n = 1, 2, 3 und 4, ist. Höherkernige Homologe C₁₅H₁₀N₂O₂[C₈H₅NO]ₘ, m = ganze Zahl ≥ 4) können ebenfalls im Gemisch aus organischen Polyisocyanaten A) enthalten sein. Als Polyisocyanat-Komponente A) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Die Polyisocyanat-Komponente A) zeichnet sich weiterhin dadurch aus, dass sie vorzugsweise eine Funktionalität von mindestens 2, insbesondere mindestens 2,2, besonders bevorzugt mindestens 2,4, und ganz besonders bevorzugt mindestens 2,7 aufweist.

Für den Einsatz als Polyisocyanat-Komponente sind polymere MDI-Typen im Hartschaum gegenüber monomeren Isocyanaten besonders bevorzugt.

Bei den Hilfs- und Zusatzstoffen C) handelt es sich um die gleichen Verbindungen, welche unter B5) beschrieben wurden. Je nach Anwendung setzt der Fachmann diese entweder als Komponente B5) bereits der Formulierung B) zu, oder dosiert sie - wie z.B. den Katalysator - zu der Reaktionsmischung aus den Komponenten A) - D).

Für die PUR/PIR-Hartschaumstoffe weiterhin eingesetzt werden so viel Treibmittel und Co-Treibmittel D), wie zur Erzielung einer dimensionsstabilen Schaummatrix und gewünschten Rohdichte nötig ist. Der Anteil kann beispielsweise von 0 bis 6,0 Gew.-% an Co-Treibmittel und von 1,0 bis 30,0 Gew.-% an Treibmittel betragen, jeweils bezogen auf 100 Gew.-% Polyolkomponente inklusive der Hilfs- und Zusatzstoffe. Das Mengenverhältnis von Co-Treibmittel zu Treibmittel kann ja nach Bedarf von 20:1 bis 0:100 betragen.

Als Treibmittel werden Kohlenwasserstoffe, z.B. die Isomeren des Butans und Pentans, Ester wie Methylformiat oder Acetale wie Methylal und Ethylal oder Fluorkohlenwasserstoffe, z.B. HFC 245fa (1,1,1,3,3-Pentafluorpropan), HFC 365mfc (1,1,1,3,3-Pentafluorbutan) oder deren Mischungen mit HFC 227ea (Heptafluorpropan) verwendet. Auch mit Fluor und mit Fluor und Chlor gemischt substituierte C3-C5 Olefine können eingesetzt werden. Es können auch verschiedene Treibmittelklassen kombiniert werden. So lassen sich z.B. mit Mischungen von n- oder c-Pentan mit HFC 245fa im Verhältnis 75:25 (n-/c-Pentan:HFC 245fa) Wärmeleitfähigkeiten, gemessen bei 10°C, von weniger als 20 mW/mK erzielen.

Als Co-Treibmittel können auch Wasser und / oder Ameisensäure eingesetzt werden, bevorzugt in einer Menge bis 6 Gew.-%, bevorzugt 0,5 bis 4 Gew.-%, bezogen auf die Gesamtmenge an Verbindungen mit gegenüber Isocyanatgruppen reaktiven Wasserstoffatomen in der Polyolkomponente. Es kann aber auch kein Wasser verwendet werden. Auch Carbaminsäure, Malonsäure und Oxalsäure bzw. insbesondere ihre Salze mit Ammoniak und anderen Aminen können als Treibmittel geeignet sein.

In bevorzugter Ausgestaltung des erfindungsgemäßen Reaktionssystems beträgt das Gewichtsverhältnis der Komponenten A) und B) zueinander von 100 : 150 bis 100 : 300, insbesondere von 100 : 180 bis 100 : 250.

Die Formulierung B) eignet sich insbesondere gut für den Einsatz in PUR-PIR-Hartschaumrezepturen. Die mit der Formulierung B) hergestellten PUR-/PIR-Hartschäume weisen eine Kombination von guten Brandschutzeigenschaften und mechanischen Eigenschaften auf.

Ein weiterer Gegenstand der Erfindung ist ein Verfahren zur Herstellung von PUR-/PIR-Hartschaumstoffen, bei dem man die Komponenten A) und B) sowie gegebenenfalls C) und D) eines erfindungsgemäßen Reaktionssystems miteinander vermischt und reagieren lässt.

Die Herstellung der PUR-/PIR-Hartschaumstoffe, welche ebenfalls Gegenstand der Erfindung sind, erfolgt typischerweise nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden

Ein solcher Hartschaumstoff kann in verschiedenen Anwendungsgebieten zum Einsatz kommen, vor allem als Isoliermaterial. Beispiele aus dem Bauwesen sind Wandisolationen, Rohrschalen bzw. Rohrhalbschalen, Dachisolierungen, Wandelemente und Fußbodenplatten. Insbesondere kann der Hartschaumstoff in Form einer Dämmplatte oder als Verbundelement (Laminate) mit flexiblen oder nicht-flexiblen Deckschichten vorliegen und eine Dichte von 25 bis 65 kg/ m³ aufweisen, insbesondere 28 bis 45 kg/m³. In einer anderen Ausgestaltung kann der Hartschaumstoff als Blockschaum vorliegen und eine Dichte von 25 bis 300 kg/m³ aufweisen, insbesondere 30 bis 80 kg/m³.

Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvlies, und/oder um eine starre Deckschicht, z.B. aus Stahlblech oder Spanplatten, handeln. Die Deckschichten werden von einer Rolle abgecoilt und gegebenenfalls profiliert, ggf. erwärmt und ggf. coronabehandelt, um die Beschäumbarkeit der Deckschichten zu verbessern. Auf die untere Deckschicht kann vor dem Auftragen des PUR/PIR-Hartschaumstoffsystems zusätzlich ein Primer aufgetragen werden.

In einer bevorzugten Ausführungsform umfasst die Formulierung B) für die Herstellung von PUR-/PIR-Hartschaumstoffen
- 50 bis 95 Gew.-% mindestens einer Verbindung ausgewählt aus der Gruppe enthaltend Polyesterpolyolen und Polyetheresterpolyolen mit einer Hydroxylzahl im Bereich von 80 mg KOH/g bis 290 mg KOH/g, umfassend ein oder mehrere Polyole B1), und
- 5,0 - 15,0 Gew.-% wenigstens eines Polyols ausgewählt aus Polyetherpolyolen mit einer Hydroxylzahl zwischen 10 und 100 mg KOH/g, bevorzugt zwischen 20 und 50 mg KOH/g, und mehr als 70 mol%, bevorzugt mehr als 80 mol%, insbesondere mehr als 90 mol% primären OH-Gruppen, mit Funktionalitäten von ≥1,2 bis ≤ 3,5, und hergestellt durch Alkoxylierung einer geeigneten Starterkomponente, mit einer Mischung aus Ethylenoxid (EO) und Propylenoxid (PO), bevorzugt mit einem EO-Gehalt von 15-70 Gew.% bezogen auf die Gesamtmenge von EO und PO,
wobei die Angaben in Gew.-% für die Polyole jeweils auf alle isocyanat-reaktiven Komponenten der Formulierung B) bezogen sind.

Ein Anteil von 5,0 - 15,0 Gew.-% eines solchen Polyols ausgewählt aus Polyetherpolyolen mit einer Hydroxylzahl im Bereich von 10 - 100 mg KOH/g, hergestellt durch Alkoxylierung einer geeigneten Starterkomponente, z.B. von Propylenglykol oder Ethylenglykol, mit Ethylenoxid (EO) und/oder Propylenoxid (PO), führt zu einer deutlichen Verbesserung der Sprödigkeit, der Offenzelligkeit und des Brandverhaltens bei den mit der Formulierung B) hergestellten Hartschaumstoffen.

Diese Formulierung B) lässt sich insbesondere vorteilhaft für die Herstellung von Reaktionsgemischen für PUR-/PIR-Hartschäume einsetzen, die für Dämmplatten verwendet werden. Insbesondere wird ein erfindungsgemäßes Reaktionsgemisch hergestellt durch Mischung der oben beschriebenen Formulierung B) mit einem Gemisch von Diphenylmethan-4,4'-diisocyanat mit Isomeren und höherfunktionellen Homologen als Komponente A) in Gegenwart von gegebenenfalls weiteren Hilfs- und Zusatzstoffen C) und einem Treibmittel und gegebenenfalls Co-Treibmittel D) bei einem Isocyanat-Index von bevorzugt ≥ 140 bis ≤ 450 eingesetzt.

Die vorliegende Erfindung wird anhand der nachfolgenden Beispiele näher erläutert.

### Beispiele

### Methoden und Begriffe

| | |
|---|---|
| Hydroxylzahl: | Die Bestimmung der OH-Zahl erfolgte gemäß der Vorschrift der DIN 53240-1 (Verfahren ohne Katalysator, Juni 2013). |
| Säurezahl: | Die Bestimmung der Säurezahl erfolgte gemäß DIN EN ISO 2114 (Juni 2002). |
| Viskosität: | Dynamische Viskosität: Rheometer MCR 51 der Firma Anton Paar entsprechend DIN 53019-1 (September 2008) mit einem Messkegel CP 50-1, Durchmesser 50 mm, Winkel 1° bei Scherraten von 25, 100, 200 und 500 s⁻¹. Die erfindungsgemäßen und nicht erfindungsgemäßen Polyole zeigen von der Scherrate unabhängige Viskositätswerte. |
| Kennzahl: | Bezeichnet das mit 100 multiplizierte molare Verhältnis von NCO- zu NCOreaktiven Gruppen einer Rezeptur |
| Rohdichte: | Die Rohdichte wurde aus der Masse und dem Volumen eines 9 x 9 cm³ Schaumwürfels bestimmt. |
| Brandeigenschaften: | Die Flammhöhe wurde gemäß ISO 11925-2 bestimmt. |

### Materialien

| | |
|---|---|
| Adipinsäure | der Fa. BASF |
| Phthalsäureanhydrid | der Fa. Polynt GmbH |
| Ölsäure | der Fa. Sigma Aldrich |
| Sojaöl | der Fa. Cargill |
| Diethylenglykol | der Fa. Brenntag GmbH |
| PEG 400 | der Fa. Oqema GmbH, Polyethylenglykol mit einer OH-Zahl von 280 mg |
| KOH/g | |
| PET | Mahlgut aus PET-Tiefziehschalen-Abfällen, Restgehalt an Polyolefinen ca. 1 Gew.% |
| Zinn(II)chlorid · 2 H₂O | der Fa. Sigma Aldrich, 28 Gew.-%-ige Lösung in Ethylenglykol |
| TCPP | Trischlorisopropylphosphat (Levagard PP der Fa. Lanxess) |
| Tegostab 8421B | der Fa. Evonik, Silikonschaumstabilisator |
| Desmorapid DB | Benzyldimethylamin der Fa. Covestro Deutschland AG |
| Desmorapid 1792 | Trimerisierungskatalysator, Zubereitung der Fa. Covestro Deutschland AG enthaltend Diethylenglykol und Kaliumacetat |
| 44V70L | Desmodur 44V70L der Fa. Covestro Deutschland AG mit einem NCO-Gehalt von 30 bis 32 Gew.% |
| Glycerincarbonat | der Fa. Huntsman |
| Propylencarbonat | Herstellung gemäß WO 2019/243435 A, Beispiel 1, Schritte (1-i) und (1-ii) |

### Herstellung der Polyesterpolyole

### Beispiel 1:

In einem 10-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 858 g Adipinsäure, 630 g Ölsäure, 650 g Phthalsäureanhydrid, 683 g Polyethylenglykol 400, 68,4 g Glyzerin und 2734 g Diethylenglykol vor und erhitzte unter Stickstoffüberschleierung auf 140 °C. Anschließend wurden 2770 g recyceltes PET zugegeben und die Temperatur auf 220 °C erhöht, wobei ab einer Temperatur von ca. 160 °C Reaktionswasser abdestillierte. Nach ca. 2 Stunden kam die Abspaltung des Reaktionswassers zum Erliegen. Die Umsetzung wurde nach Zugabe von 20 ppm Zinn(II)chlorid-dihydrat bei einem Vakuum von 300 mbar und einer Temperatur von 220 °C vervollständigt. Das Rohprodukt wurde bei 80 °C filtriert (3 µ).

### Analyse des Polyesters:

| | |
|---|---|
| Hydroxylzahl: | 239,4 mg KOH/g |
| Säurezahl: | 1,2 mg KOH/g |
| Viskosität: | 2600 mPa · s bei 25 °C |

Das Produkt trübt sich nach einer Woche Lagerung bei Raumtemperatur und bildet ein Sediment.

Die Polyesterpolyole in Beispiel 2 und 3 wurden analog, wie in Beispiel 1 beschrieben, hergestellt.

**Tabelle 1: Polyester-Polyol Synthese**

| | | Beispiel 1 | Beispiel 2 | Beispiel 3* |
|---|---|---|---|---|
| PET | [Gew.-%] | 33,4 | 38,0 | 33,4 |
| Phthalsäureanhydrid | [Gew.-%] | 7,0 | - | 7,0 |
| Adipinsäure | [Gew.-%] | 10,4 | 13,2 | 13,8 |
| Ölsäure | [Gew.-%] | - | 5,0 | - |
| Sojaöl | [Gew.-%] | 7,9 | - | 8,2 |
| Diethylenglykol | [Gew.-%] | 33,0 | 29,2 | 37,5 |
| PEG 400 | [Gew.-%] | 8,3 | 14,6 | - |
| Zinn(II)chlorid · 2H₂O | [ppm] | 20 | 20 | 20 |

| **Analytik:** | | | | |
|---|---|---|---|---|
| OH-Zahl | [mg KOH/g] | 239,4 | 244,5 | 246,9 |
| Säurezahl | [mg KOH/g] | 1,2 | 1,2 | 0.8 |
| Viskosität 25 °C | [mPa·s] | 2600 | 1600 | |
| Aussehen des Produktes nach 1 Woche | | Trüb mit Sediment | Trüb mit Sediment | Klar ohne Sediment |
| Aussehen des Produktes nach 3 Monaten | | - | - | Klar ohne Sediment |

Die Polyesterpolyole wurden in unterschiedlichen Verhältnissen mit cyclischen Carbonaten vermischt und für 1 h bei 80 °C gerührt. Die Lagerung erfolgte bei 23 °C.

**Tabelle 2: Lagerstabilität von Polyester-Polyol/Carbonat-Gemischen**

| | | | Beispiel 4 | Beispiel 5 | Beispiel 6 | Beispiel 7 | Beispiel 8 |
|---|---|---|---|---|---|---|---|
| Beispiel 1 | | [Teile] | 95 | 90 | - | - | 92 |
| Beispiel 2 | | [Teile] | - | - | 95 | 90 | - |
| Propylencarbonat | | [Teile] | 5 | 10 | 5 | 10 | - |
| Glycerincarbonat | | [Teile] | - | - | - | - | 8 |
| Aussehen nach 4 Wochen | | | klar | klar | klar | klar | klar |
| Aussehen nach 3 Monaten | | | klar | klar | klar | klar | Trüb mit Sediment |

Die Beispiele 1 und 2 zeigen, dass die Polyesterpolyole B1) in Abwesenheit des cyclischen Carbonates B2) während der Lagerung sedimentieren. Die erfindungsgemäßen Beispiele 4 - 8 zeigen, dass die Lagerstabilität der Polyester-Polyole mit einem hohen Gehalt an Polyether durch Formulierung mit cyclischen Carbonaten verbessert wird.

### Herstellung der PIR-Hartschaumstoffe

Auf Basis der in Tabelle 1 dargestellten Polyesterpolyole wurden PIR-Hartschaumstoffe hergestellt. Die Rezepturen und Ergebnisse der physikalischen Messungen an den erhaltenen Proben sind in Tabelle 3 wiedergegeben.

**Tabelle 3: PUR/PIR-Hartschäume**

| Beispiel | | 9 | 10 | 11 | 12 | 13 | 14 | 15 |
|---|---|---|---|---|---|---|---|---|
| Beispiel 1 | [Teile] | 77,6 | 73,9 | 70,6 | - | - | - | - |
| Beispiel 2 | [Teile] | - | - | - | 77,6 | 73,7 | 69,8 | - |
| Beispiel 3 | [Teile] | - | - | - | - | - | - | 77,6 |
| Propylencarbonat | [Teile] | - | 3,7 | 7,1 | - | 3,9 | 7,8 | - |
| TCPP | [Teile] | 15,5 | 15,5 | 15,5 | 15,5 | 15,5 | 15,5 | 15,5 |
| Tegostab B8421 | [Teile] | 2,0 | 2,0 | 2,0 | 2,0 | 2,0 | 2,0 | 2,0 |
| Wasser | [Teile] | 1,2 | 1,2 | 1,2 | 1,2 | 1,2 | 1,2 | 1,2 |
| Desmorapid 726B | [Teile] | 0,7 | 0,7 | 0,7 | 0,7 | 0,7 | 0,7 | 0,7 |
| Desmorapid 1792 | [Teile] | 3,5 | 3,5 | 3,5 | 3,5 | 3,5 | 3,5 | 3,5 |
| c/i-Pentan | [Teile] | 17,8 | 17,6 | 17,6 | 17,7 | 17,9 | 18,0 | 17,7 |
| 44V70L | [Teile] | 232 | 232 | 232 | 232 | 232 | 232 | 232 |
| Kennzahl | [-] | 329 | 339 | 349 | 324 | 334 | 346 | 323 |
| Polyester/Propylencarbonat | [-] | - | 20/1 | 10/1 | - | 19/1 | 9/1 | - |
| Isocyanattemperatur | [°C] | 35 | 35 | 35 | 23 | 23 | 23 | 23 |
| Startzeit | [s] | 7 | 7 | 8 | 13 | 10 | 10 | 17 |
| Abbindezeit | [s] | 25 | 26 | 35 | 40 | 39 | 38 | 52 |
| Steigzeit | [s] | 45 | 45 | 46 | 60 | 62 | 63 | 95 |
| Kernrohdichte | [kg/m³] | 32,6 | 33,7 | 32,1 | 31,9 | 31,3 | 30,5 | 31,9 |
| Offenzelligkeit | [%] | 9,5 | 9,6 | 9,9 | 9,62 | 7,9 | 7,6 | 10,4 |
| KBT Flammhöhe | [mm] | 12,0 | 13,0 | 12,5 | 12,0 | 12,0 | 12,0 | 12,0 |
| Innere Schaumoberfläche | [-] | elastisch | elastisch | elastisch | elastisch | elastisch | elastisch | spröde |

Die Beispiele 9 - 14 zeigen, dass die Polyolformulierung bestehend aus dem PAT-Polyesterpolyol B1 und dem cyclischen Carbonat B2 zu vorteilhaften Schaumeigenschaften führt. Das Beispiel 15 zeigt, dass ein PAT-Polyesterpolyol mit < 3 Mol.-% Baueinheiten ak3 zu spröden Schaumstoffen führt

## Patentansprüche

1. Formulierung B) geeignet zur Umsetzung mit Isocyanaten umfassend die Komponenten
B1) mindestens ein Polyester-Polyol erhältlich aus Terephthalsäure und einem oder mehreren Diolen mit einem Molgewicht <100 g/mol und
B2) mindestens ein cyclisches Carbonat der Struktur II oder III 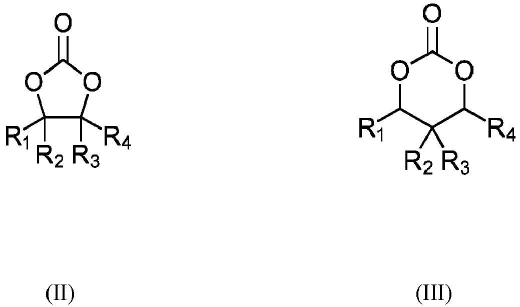 wobei die Reste R₁ - R₄ jeweils ausgewählt sind aus der Gruppe enthaltend Wasserstoff sowie substituierte und unsubstituierte Alkyl- und Aryl-Gruppen.

2. Formulierung B) gemäß Anspruch 1, **dadurch gekennzeichnet, dass** das Gewichtsverhältnis der Komponente B1) zu B2) in einem Bereich von 85 : 15 - 99 : 1 liegt, insbesondere in einem Bereich von 88 : 12 - 97 : 3 und ganz besonders bevorzugt in einem Bereich von 90 : 10 - 95 : 5.

3. Formulierung B) gemäß Anspruch 1 oder 2, **dadurch gekennzeichnet, dass** B1) erhältlich ist aus Terephthalsäure, einem oder mehreren Diolen mit einem Molgewicht <100 g/mol und einem oder mehreren Diolen mit einem Molgewicht von mit einem Molgewicht > 190 g/mol, bevorzugt 191 - 800 g/mol.

4. Formulierung B) gemäß Anspruch 1, 2 oder 3, **dadurch gekennzeichnet, dass** B1) erhältlich ist aus Terephthalsäure, einem oder mehreren Diolen mit einem Molgewicht <100 g/mol und einer oder mehreren Verbindungen aus der Gruppe bestehend aus difunktionellen aliphatischen Carbonsäuren und difunktionellen aliphatischen Carbonsäurederivaten.

5. Formulierung B) gemäß einem der vorangehenden Ansprüchen, **dadurch gekennzeichnet, dass** das Polyesterpolyol B1) erhältlich ist aus einem Gemisch CS aus Carboxy-funktionellen Verbindungen umfassend:
CS1 eine Verbindung ausgewählt aus der Gruppe bestehend aus Terephthalsäure und Derivaten der Terephthalsäure,
CS2 optional eine von CS1 verschiedene Verbindung ausgewählt aus der Gruppe bestehend aus aromatischen Dicarbonsäuren und deren Derivate, insbesondere ein niedermolekulares Derivat, ganz besonders bevorzugt Phthalsäureanhydrid,
CS3 optional mindestens eine, bevorzugt mindestens eine Verbindung ausgewählt aus der Gruppe bestehend aus aliphatischen Dicarbonsäuren und deren Derivaten,
CS4 optional mindestens eine, bevorzugt mindestens eine Verbindung ausgewählt aus der Gruppe bestehend aus Monocarbonsäuren mit einem Molgewicht ≥ 100 g/mol und deren Derivaten,
CS5 optional weitere Carbonsäuren und / oder deren Derivate,
und einem Gemisch AK aus alkoholischen Verbindungen umfassend:
AK1 mindestens eine Verbindung ausgewählt aus der Gruppe bestehend aus Diolen mit einem Molgewicht <100 g/mol und deren Derivate,
AK2 optional mindestens eine, bevorzugt mindestens eine Verbindung ausgewählt aus der Gruppe bestehend aus Diolen mit einem Molgewicht von 100-190 g/mol, bevorzugt mit >80 mol-% der OH-Funktionen primäre aliphatische OH-Funktionen, und deren Derivate,
AK3 optional mindestens eine, bevorzugt mindestens eine, Verbindung ausgewählt aus der Gruppe bestehend aus Diolen mit einem Molgewicht von mit einem Molgewicht > 190 g/mol, bevorzugt 191 - 800 g/mol, oder deren Derivate,
AK4 optional eine oder mehrere Verbindungen ausgewählt aus der Gruppe bestehend aus bestehend aus Polyhydroxylverbindungen mit einer Funktionalität ≥3 und mit einem Molgewicht 90-190 g/mol (keine Polyether) und deren Derivaten AK5 optional ein oder mehrere Monoole, z. B. nichtionische Tenside, und / oder Derivate dieser Alkohole,
welche optional in Gegenwart eines Veresterungskatalysators K umgesetzt werden.

6. Formulierung B) gemäß einem der vorangehenden Ansprüche weiterhin **dadurch gekennzeichnet, dass** das Polyesterpolyol B1) aufgebaut ist aus:
| | |
|---|---|
| cs1 40-60 Mol.-% bezogen auf cs, | bevorzugt 45-55 Mol.%, Baueinheiten erhältlich aus Terephthalsäure CS1, |
| cs2 0-25 Mol.-% bezogen auf cs, | bevorzugt 0-20 Mol.-%, Baueinheiten abgeleitet von mindestens einer weiteren von CS1 verschiedenen aromatischen Dicarbonsäure, |
| cs3 15-45 Mol.-% bezogen auf cs, | bevorzugt 25-40 Mol.-%, Baueinheiten abgeleitet von mindestens einer aliphatischen Dicarbonsäure |
| cs4 4-14 Mol.-% bezogen auf cs, | Baueinheiten abgeleitet von mindestens einer Monocarbonsäure mit einem Molgewicht ≥100 g/mol, und |
| cs5 0-41 Mol.-% bezogen auf cs, | Baueinheiten abgeleitet von weiteren Carbonsäuren, undaus |
| akl 25-40 Mol.-% bezogen auf ak, | bevorzugt 25-38 Mol.-% Baueinheiten abgeleitet von ein oder mehreren Diolen mit einem Molgewicht < 100 g/mol, |
| ak2 55-75 Mol.-% bezogen auf ak, | bevorzugt 60 - 75 Mol.-% Baueinheiten abgeleitet von ein oder mehreren Diolen mit einem Molgewicht von 100-190 g/mol, bevorzugt sind >80 mol-% der OH-Funktionen primäre aliphatische OH-Funktionen, |
| ak3 3-9 Mol.-% bezogen auf ak, | Baueinheiten abgeleitet von ein oder mehreren Diolen mit einem Molgewicht >190 g/mol, bevorzugt 191 - 800 g/mol, |
| ak4 0-3 Mol.-% bezogen auf ak, | Baueinheiten abgeleitet von ein oder mehreren Polyolen mit einer Funktionalität ≥3 und mit einem Molgewicht 90-190 g/mol (keine Polyether), |
| ak5 0-2 Mol.-% bezogen auf ak, | Baueinheiten abgeleitet von ein oder mehreren Monoolen, z. B. nichtionische Tensiden. |

7. Formulierung B) gemäß einem der vorangehenden Ansprüche, **dadurch gekennzeichnet, dass** das Polyesterpolyol B1) eine Viskosität von ≤ 8 Pa^{∗}s (25°C) aufweist und/oder dass das Polyesterpolyol B1) eine Hydroxylzahl von 150 bis 350 mg KOH/g auf und eine Säurezahl von 0,5-5 mg KOH/g und eine OH-Funktionalität von 1,8 bis 3 besitzt.

8. Formulierung B) gemäß einem der vorangehenden Ansprüche, **dadurch gekennzeichnet, dass** das cyclische Carbonat B2) Propylencarbonat und/ oder Ethylencarbonat ist.

9. Formulierung B) gemäß einem der vorangehenden Ansprüche, **dadurch gekennzeichnet, dass** zur Herstellung des Polyesterpolyols B1) Poly(ethylenterephthalat) und / oder Poly(butylenterephthalat) -Recyclate eingesetzt wird.

10. Formulierung B) gemäß einem der vorangehenden Ansprüche, **dadurch gekennzeichnet, dass** zur Herstellung des Polyesterpolyols B1) Polyethylenglykol eingesetzt wird.

11. Formulierung B) gemäß einem der vorangehenden Ansprüche, **dadurch gekennzeichnet, dass** sie
- 50 bis 95 Gew.-% mindestens einer Verbindung ausgewählt aus der Gruppe enthaltend Polyesterpolyolen und Polyetheresterpolyolen mit einer Hydroxylzahl im Bereich von 80 mg KOH/g bis 290 mg KOH/g, umfassend ein oder mehrere Polyole B1), und
- 5,0 - 15,0 Gew.-% wenigstens eines Polyols ausgewählt aus Polyetherpolyolen mit einer Hydroxylzahl zwischen 10 und 100 mg KOH/g, bevorzugt zwischen 20 und 50 mg KOH/g, und mehr als 70 mol%, bevorzugt mehr als 80 mol%, insbesondere mehr als 90 mol% primären OH-Gruppen, mit Funktionalitäten von ≥1,2 bis ≤ 3,5 und hergestellt durch Alkoxylierung einer geeigneten Starterkomponente, mit einer Mischung aus Ethylenoxid (EO) und Propylenoxid (PO), bevorzugt mit einem EO-Gehalt von 15-70 Gew.% bezogen auf die Gesamtmenge von EO und PO,
wobei die Angaben in Gew.-% für die Polyole jeweils auf alle isocyanat-reaktiven Komponenten der Formulierung B) bezogen sind,
enthält.

12. Reaktionssystem zur Herstellung von PUR-/PIR-Hartschaumstoffen, umfassend die folgenden Komponenten:
A) eine Polyisocyanatkomponente, bevorzugt einem Gemisch von Diphenylmethan-4,4'-diisocyanat mit Isomeren und höherfunktionellen Homologen,
B) die erfindungsgemäße Formulierung B) gemäß einem der Ansprüche 1 - 11,
C) gegebenenfalls weitere Hilfs- und Zusatzstoffe und
D) optional Treibmittel und Co-Treibmittel,
wobei die organische Polyisocyanatkomponente A) zu den Komponenten B) und ggf. C) in einem solchen Mengenverhältnis zueinander eingesetzt sind, dass sich ein Index von 100 bis 500 ergibt, insbesondere von 140 bis 450.

13. Verfahren zur Herstellung von PUR-/PIR-Hartschaumstoffen durch Umsetzung eines Reaktionssystems gemäß Anspruch 12.

14. PUR-/PIR-Hartschaumstoff, erhältlich durch ein Verfahren gemäß Anspruch 13.

15. PUR-PIR-Hartschaumstoff nach Anspruch 14, **dadurch gekennzeichnet, dass** der Hartschaumstoff in Form einer Dämmplatte oder als Verbundelement mit flexiblen oder nicht-flexiblen Deckschichten vorliegt und eine Dichte von 25 bis 65 kg/ m³ aufweist, insbesondere 30 bis 45 kg/m³ oder dass der Hartschaumstoff als Blockschaum vorliegt und eine Dichte von 25 bis 300 kg/m³ aufweist, insbesondere 30 bis 80 kg/m³.
